# EUROPÄISCHE PATENTSCHRIFT

(11) **EP 2 870 451 B1**
(45) Veröffentlichungstag und Bekanntmachung des Hinweises auf die Patenterteilung: **14.08.2019**
(21) Anmeldenummer: 13786410.4
(22) Anmeldetag: 02.07.2013
(51) Int. Cl.: G01M 17/10, B61K 9/12, G01N 27/82

(54) **VERFAHREN UND VORRICHTUNG ZUR ÜBERPRÜFUNG VON EISENBAHNRÄDERN**
METHOD AND DEVICE FOR INSPECTING RAILWAY WHEELS
PROCÉDÉ ET DISPOSITIF DE CONTRÔLE DE ROUES FERROVIAIRES

(30) Priorität: 04.07.2012 DE 102012013626
(43) Veröffentlichungstag der Anmeldung: 13.05.2015
(73) Patentinhaber: Hegenscheidt-MFD GmbH & Co. KG, 41812 Erkelenz (DE)
(72) Erfinder: DE LA RIVA, Camilo, 41516 Grevenbroich (DE)
(74) Vertreter: Patentanwälte Findeisen Neumann Scheit Partnerschaft mbB
(86) Internationale Anmeldenummer: PCT/DE2013/000370
(87) Internationale Veröffentlichungsnummer: WO 2014/005574

(56) Entgegenhaltungen:
- WO-A1-2009/054566
- DE-A1- 4 031 899
- DE-A1- 19 836 513
- US-A- 1 702 997
- US-A- 2 442 491
- US-A- 3 844 513
- US-B1- 6 262 573
- US-B1- 6 523 411

## Beschreibung

Die Erfindung betrifft eine technische Lösung zur Überprüfung von Eisenbahnrädern bezüglich eines nutzungsbedingten Verschleißes und/oder eines Materialdefektes, wobei das in einem Schienenfahrzeug eingebaute Eisenbahnrad während einer Fahrbewegung dieses Schienenfahrzeuges geprüft wird.

Eisenbahnräder sind in verschiedenartigen Ausführungen bekannt, beispielsweise mit einem auf einem Radkörper aufgeschrumpften und auf der Schiene abrollenden Radkranz oder mit einer aus Vollmaterial bestehenden Radscheibe, bei der die Lauffläche als integraler Teil dieser Radscheibe ausgestaltet ist. Unabhängig von der.jeweils konkreten Ausführung sind Eisenbahnräder hoch belastete Komponenten im Rad-Schiene System und unterliegen durch den Kontakt mit der Schiene zwangsläufig einem Verschleiß. Die Laufbahnen verschleißen infolge ihres Kontaktes mit dem Schienenkopf und die Radspurkränze verschleißen infolge ihres Kontaktes mit der Innenfläche des Schienenkopfes, insbesondere in Gleiskurven und beim Durchfahren von Weichen. Neben diesem funktionell bedingten Verschleiß an den Rädern können auch Materialdefekte durch eine Überlastung der Räder oder durch Fertigungsfehler bei der Herstellung auftreten. Deshalb werden Eisenbahnräder turnusmäßig mit etablierten Methoden (Ultraschall, Wirbelstrom, Röntgen) manuell oder halbautomatisch auf Materialdefekte untersucht, um einen weiterhin sicheren Fahrbetrieb zu gewährleisten. Aufgrund der vielen Radsätze in einem Zug verursachen derartige Inspektionen allerdings lange Stillstandzeiten und erfordern hoch qualifiziertes Personal sowie den Einsatz von Prüftechnik in erheblichem Umfang. Diesbezüglich sind als Stand der Technik bereits unterschiedliche Prüfmethoden bekannt.

So beschreibt DE 693 03 989 T2 eine vorzugsweise für Hersteller von Eisenbahnrädern geeignete technische Lösung zur Prüfung der Härte und Restspannung in Eisenbahnrädern: Die Härteprüfung erfolgt durch Kugeleindrücken und die Restspannungsprüfung mittels Ultraschall, wobei eine gerüstartige Vorrichtung verwendet wird, die zahlreiche Halte- und Verlagerungseinrichtungen zur Handhabung der Messtechnik aufweist.

DE 103 52 166 B3 betrifft eine für den Werkstatteinsatz konzipierte Vorrichtung zur teilautomatischen Ermittlung der Oberflächenbeschaffenheit der Lauffläche von Eisenbahnrädern im eingebauten Zustand. Dabei ist auf einer Messplattform für beide Räder eines Radsatzes jeweils eine Messvorrichtung angeordnet. Nachdem beide Räder etwas angehoben und in eine Drehbewegung versetzt sind, wird die Lauffläche jedes Rades durch einen Messstrahl schrittweise abgetastet. Die vom Messstrahl ermittelten Abstände zwischen Messvorrichtung und Lauffläche des Rades werden computertechnisch zur Einschätzung von Unrundheiten und Oberflächenbeschaffenheit ausgewertet.

Aus DE 11 2006 002 123 T5 ist eine Vorrichtung mit einem sog. Lehrenkopf bekannt, der lösbar auf einem Eisenbahnrad montiert werden kann und dem mehrere Sensoren zum Messen von typischen geometrischen Komponenten des Eisenbahnrades zugeordnet sind, beispielsweise ein Spurkranzhöhensensor und ein Spurkranzdickensensor. Dieser Lehrenkopf steht mit einer Steuer- und Auswerteeinrichtung in Wirkverbindung.

DE 199 24 781 A1 beschreibt eine weitere technische Lösung zum Prüfen eines in einem Schienenfahrzeug eingebauten Eisenbahnrades. Dabei wird ein Eisenbahnzug mit geringer Geschwindigkeit über eine Prüfstrecke gefahren. Eine Prüfsonde wird auf einer Führungsschiene parallel zur Prüfstrecke zunächst mit einem Linearantrieb auf die Fahrgeschwindigkeit des Zuges einreguliert und nachfolgend kontaktiert die Prüfsonde das Eisenbahnrad.

Ein ähnlicher Lösungsansatz ist aus DE 199 43 744 B4 bekannt, wobei hier vorzugsweise der Radkranz und der Spannrand durch mehrere Prüfköpfe während des Einfahrens des Zuges in eine Wartungshalle auf einem Prüfgleis für routinemäßige Überprüfungen zeitgleich geprüft werden.

US 1 702 997 A betrifft einen induktiven Radsensor bzw. Achszähler, Diese Lösung ist aber lediglich zur Erkennung einer Radpassage am Standort des Sensors konzipiert und nicht für Prüfaufgaben an einem Radsatz.

In US 6 523 411 B1 wird eine Ultraschallprüfung von Eisenbahnrädern mit Prüfköpfen beschrieben. Hierbei werden magnetische Wechselfelder zur Erzeugung und Detektion von Ultraschall verwendet, wobei in der Lauffläche der Eisenbahnräder Oberflächenwellen erzeugt werden.

Aus WO 2009/054 566 A1 ist eine magnetische Prüfung für Radoberflächen bekannt. Die Oberfläche wird zunächst örtlich begrenzt mit einer magnetischen Linse magnetisiert und danach wird die erreichte Magnetfeldstärke an der Oberfläche mit einem Array-Sensor aufgezeichnet. Da Kerben und Kanten an der Oberfläche das Magnetfeld verzerren, können Beschädigungen festgestellt werden, allerdings nur an der Oberfläche. Damit ein Rad über den gesamten Umfang untersucht werden kann, müssen außerdem eine Vielzahl magnetischer Linsen und Arrays hintereinander geschaltet werden.

Gegenstand von US 2 442 491 A ist eine weitere oberflächengeeignete Prüfung. Hierbei durchläuft die Bandage eines rollenden Eisenbahnrades eine Rinne, die mehrere links und rechts der Schiene angeordnete Antennen umfasst, welche einen elektromagnetischen Schwingkreis bilden. Sobald ein Rad durch diese Rinne läuft, verstimmt sich der Schwingkreis einmalig und verbleibt solange in diesem Zustand, bis das Rad die Rinne wieder verlässt. Sofern während der Durchfahrt des Rades durch die Rinne jedoch eine plötzliche Änderung der Radprofilkontur (beispielsweise infolge eines gebrochenen Spurkranzes oder durch ein Loch in der Radlauffläche) auftritt, ergibt sich eine Frequenzverstimmung, die zur Auslösung eines Signals als Hinweis auf eine vorliegende Schadstelle verwendet wird. Ein wesentlicher Nachteil ist jedoch, dass z.B. ein hohler Spurkranz oder überwalzte Defekte nicht erkannt werden, sofern die Oberflächenkontur der Radbandage an dieser Stelle fehlerfrei ist.

US 3 844 513 A betrifft eine technische Lösung, mit der Flachstellen als Defekte an der Profilkontur eines Radsatzes ermittelt werden. Dabei wird ein Gleis aus mehreren Segmenten aufgebaut, die elektrisch gegeneinander isoliert sind. Ein Radsatz, der über ein derartiges Gleis rollt, verursacht einen elektrischen Kurzschluss zwischen rechter und linker Schiene. Sofern der Radsatz eine Flachstelle aufweist und mit ausreichend Geschwindigkeit über das Gleis fährt, kommt es zu einer unregelmäßigen Bewegung, ähnlich eines "Hüpfens". Durch das Hüpfen infolge einer Flachstelle wird der Kurzschluss kurzzeitig unterbrochen und die Unterbrechung kann zur Auslösung eines Signals als Hinweis auf eine Schadstelle verwendet werden.

Obwohl somit bereits eine Vielzahl technischer Lösungen zur Überprüfung von Eisenbahnrädern bekannt ist, besteht weiterhin Entwicklungsbedarf. Dies ist insbesondere durch eine ständig zunehmende Nachfrage nach automatisierter, robuster und effizienter Prüftechnik begründet.

Aufgabe der Erfindung ist es, eine technische Lösung zu schaffen, mit der verschiedene Ausführungen von Eisenbahnrädern mit Ihren einem Verschleiß unterliegenden Bauteilen bzw. Bauteilabschnitten in kurzen Zeiträumen mit akzeptablen Kosten bezüglich eventueller Schäden geprüft werden können. Insbesondere soll eine Überprüfung der Eisenbahnräder im Überfahrbetrieb realisiert werden, mit der die Prüfergebnisse für einen kompletten Zug während der Überfahrzeit über eine zugeordnete Prüfeinrichtung erstellt werden können. Außerdem soll eine Detektion von verschiedenartigen Defekten beim Prüfvorgang gewährleistet werden. Insbesondere wird eine magnetische Materialprüfung angestrebt, mit der nicht nur eine Radoberfläche, sondern die gesamte Materialstruktur eines Radsatzes geprüft werden kann.

Diese Aufgabe wird verfahrenstechnisch gelöst, indem der rollende Eisenbahnradsatz ein räumlich begrenztes Magnetfeld durchläuft, welches durch die Schienen eingekoppelt wird, auf denen das zugeordnete Schienenfahrzeug geführt wird, indem ein Gleisabschnitt funktionell als Elektromagnet benutzt und der magnetische Fluss durch das überrollende Rad analysiert wird, wobei der Radsatz, das Gleis und das Magnetjoch zwischen rechter und linker Schiene einen magnetischen Kreis ausbilden. Hierfür wird eine Vorrichtung verwendet, bei der zwischen den Schienen ein Elektromagnet angeordnet ist, auf dem auch eine Messwicklung zur Registrierung von Änderungen des Magnetflusses ausgestaltet ist. Vorteilhafte Ausgestaltungen sind Gegenstand von Unteransprüchen, deren technische Merkmale im Ausführungsbeispiel näher erläutert werden.

Gemäß der Erfindung erfolgt die Materialprüfung von Eisenbahnrädern durch eine Analyse des magnetischen Flusses durch einen belasteten rollenden Radsatz. Hierfür wird ein Gleissegment derart präpariert, dass eine linke und eine rechte Schiene funktionell die Polschuhe eines Magneten bilden. Eisenbahnräder üblicher Ausführung umfassen mehrere Bauteile aus ferromagnetischem Stahl, insbesondere eine Radsatzwelle, zwei Radscheiben sowie eventuell auch Bremsscheiben und/oder Antriebszahnräder. Der magnetische Fluss durch das Rad von der einen zur anderen Schiene des Gleises wird durch die Hertz'schen Kontaktflächen Rad/Schiene, durch die Sitze der Radscheiben auf der Welle und durch die sog. Barkhausensprünge im wechselbelasteten, vormagnetisierten und rotierenden Material moduliert. In einem exakt rotationssymmetrischen Radkörper ergeben sich dabei andere Modulationen als in einem Radkörper, der Singularitäten im Gefüge bzw. in den Laufflächen aufweist. Somit ergeben sich in Abhängigkeit des aktuellen Radzustands unterschiedliche Signale. Die entsprechenden Signalverläufe werden analysiert, klassifiziert und gemäß ihrer Charakteristik konkreten Zuständen des Radsatzes zugeordnet.

Durch die Erfindung wird somit eine technische Lösung zum Nachweis von Materialdefekten in eingebauten Eisenbahnrädern während der Fahrt eines Zuges verfügbar, wobei der grundlegende Lösungsansatz eine Fehlersuche im rollenden Radsatz über magnetische Flussänderungen umfasst.

Nachfolgend wird ein Ausführungsbeispiel der Erfindung anhand der Zeichnung erläutert. Es zeigen:
- Fig. 1: den grundsätzlichen Aufbau einer erfindungsgemäßen Vorrichtung stilisiert im Querschnitt
- Fig. 2: die Vorrichtung gemäß Fig. 1 in Seitenansicht

Die in der Zeichnung dargestellte Vorrichtung ist für eine Überprüfung von Eisenbahnrädern konzipiert, die in einem (nicht dargestellten) Schienenfahrzeug eingebaut sind. Dabei rollt der Radsatz 1 während einer Fahrbewegung des Schienenfahrzeuges über einen Gleisabschnitt, bei dem zwischen der linken Schiene 2 und der rechten Schiene 3 ein Elektromagnet angeordnet ist. Der Elektromagnet umfasst eine Erregerspule 4 und eine Detektorspule 5, die als Messwicklung zur Registrierung von Änderungen des Magnetflusses wirksam wird.

Der Elektromagnet 4; 5 besteht vorzugsweise aus Transformatorenblech oder aus Ferrit, um Wirbelstromverluste bei den Messsignalen klein zu halten. Dieser Elektromagnet 4; 5 kann verschiedenartig ausgestaltet werden. So können die Schienen 2 und 3 durch eine funktionell als Elektromagnet ausgestaltete Schwelle 6 verbunden sein, auf der wiederum eine Messwicklung 5 zur Registrierung von Änderungen des Magnetflusses angeordnet ist. Alternativ ist es möglich, dass der Elektromagnet 4; 5 zwischen den Schienen 2 und 3 ohne tragende Funktion als Schwelle eingebaut wird. Unabhängig von der konkreten Ausführung sind zwischen den Schienen 2 und 3 sowie dem Elektromagnet 4; 5 Hall-Elemente oder funktionell äquivalente Magnetfeld-Sensoren eingebracht, um zeitlich schnell veränderliche Änderungen im Magnetfluss zu registrieren.

Vorzugsweise werden Länge und Anzahl der Segmente 7 der aus jeweils zwei Schienen 2; 3 bestehenden Gleisstücke so ausgewählt, dass zumindest zwei nahe beieinander liegende Radsätze 1 (wie z.B. in einem Drehgestell) parallel prüfbar sind. Außerdem ist es vorteilhaft, sofern Länge und Anzahl dieser Gleissegmente 7 so ausgewählt werden, dass mit jedem Segment 7 ein vollständiger Umlauf eines üblichen Eisenbahnrades prüfbar ist. Diese Forderungen können erfüllt werden, sofern zum Beispiel vier Gleissegmente 7 mit einer Länge von jeweils 1,1 Meter verwendet werden, wobei dies nicht als Einschränkung der erfindungsgemäßen Ausgestaltung zu bewerten ist. Eine weitere vorteilhafte Ausgestaltung sieht vor, dass aufeinanderfolgende Segmente 7 jeweils durch MU-Metallplatten 8 i voneinander getrennt und miteinander verlascht sind.

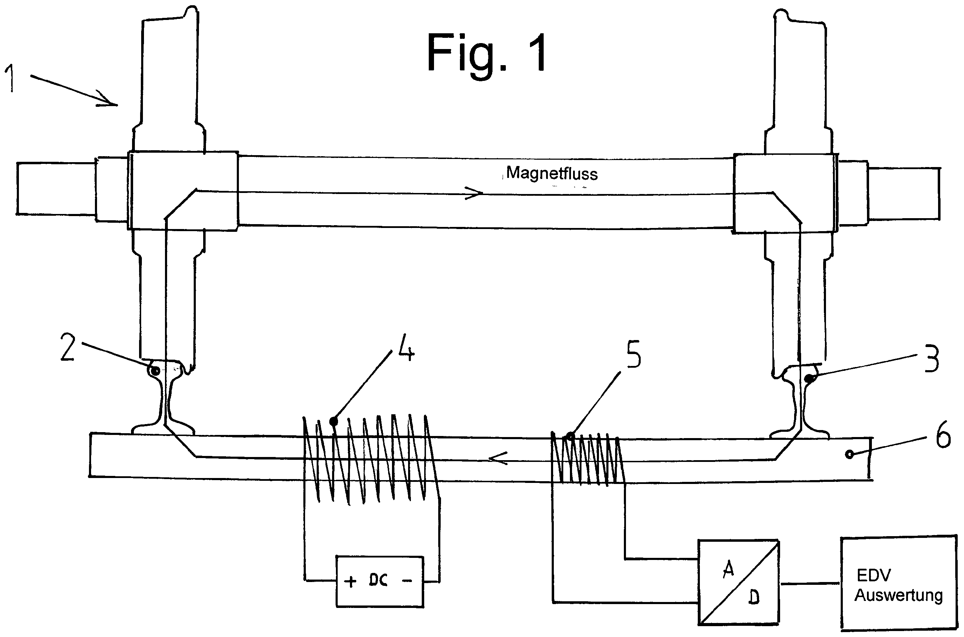

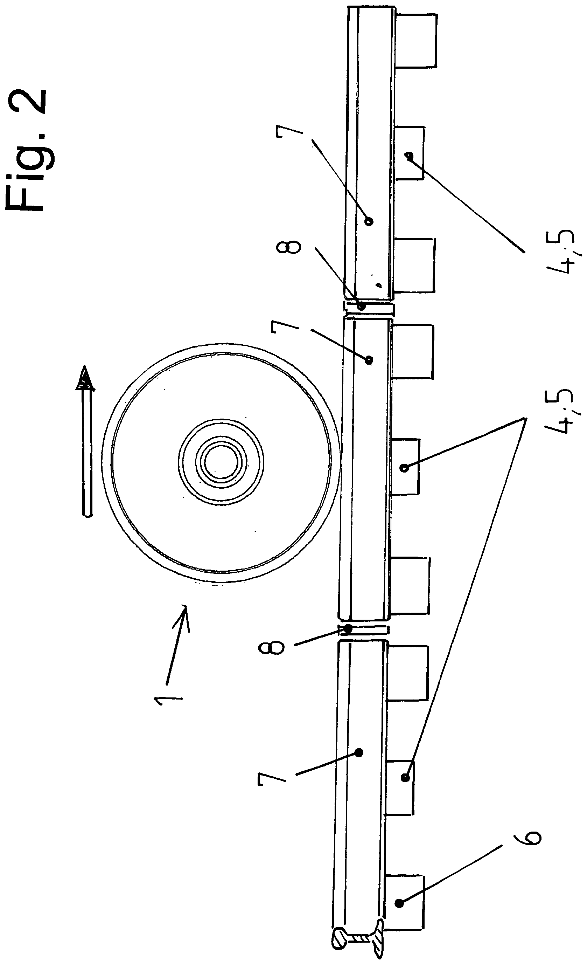

Für eine Überprüfung von Eisenbahnrädern bezüglich eines nutzungsbedingten Verschleißes und/oder eines Materialdefektes wird das eingebaute Eisenbahnrad mit dem zugeordneten Schienenfahrzeug in eine Fahrbewegung versetzt, wobei die Rollrichtung in Fig. 2 mit einem Pfeil stilisiert ist. Unter Nutzung der Vorrichtung gemäß Fig. 1 und Fig. 2 durchläuft der rollende Eisenbahnradsatz 1 ein räumlich begrenztes Magnetfeld. Das Magnetfeld wird durch die Schienen 2 und 3 eingekoppelt, auf denen das zugeordnete Schienenfahrzeug geführt wird. Hierbei wird ein Gleisabschnitt funktionell als Elektromagnet benutzt und der magnetische Fluss durch das überrollende Rad wird analysiert. Dabei bilden der Radsatz 1, das Gleis und das Magnetjoch zwischen rechter Schiene 3 und linker Schiene 2 einen magnetischen Kreis aus. Der Magnetfluss ist in Fig. 1 mit einer umlaufenden Pfeilkontur stilisiert. Dabei werden Messsignale induziert, die insbesondere durch die rollenden Kontakte Rad-Schiene, durch die Radlast und durch das Materialgefüge im Radsatz 1 beeinflusst werden. Die Auswertung dieser Messsignale ermöglicht eine Aussage über einen nutzungsbedingten Verschleiß oder sonstige Materialdefekte der geprüften Eisenbahnradsätze 1.

### Bezugszeichenliste

- 1: Radsatz
- 2: Schiene
- 3: Schiene
- 4: Erregerspule
- 5: Detektorspule / Messwicklung
- 6: Schwelle
- 7: Gleissegment
- 8: MU-Metallplatten

## Patentansprüche

1. Verfahren zur Überprüfung von Eisenbahnrädern bezüglich eines nutzungsbedingten Verschleißes und/oder eines Materialdefektes, wobei das in einem Schienenfahrzeug eingebaute Eisenbahnrad während einer Fahrbewegung dieses Schienenfahrzeuges geprüft wird, **dadurch gekennzeichnet,**
**dass** der rollende Eisenbahnradsatz ein räumlich begrenztes Magnetfeld durchläuft, welches durch die Schienen eingekoppelt wird, auf denen das zugeordnete Schienenfahrzeug geführt wird, indem ein Gleisabschnitt funktionell als Elektromagnet benutzt und der magnetische Fluss durch das überrollende Rad analysiert wird, wobei der Radsatz, das Gleis und das Magnetjoch zwischen rechter und linker Schiene einen magnetischen Kreis ausbilden.

2. Vorrichtung zur Überprüfung von Eisenbahnrädern bezüglich eines nutzungsbedingten Verschleißes und/oder eines Materialdefektes, wobei das in einem Schienenfahrzeug eingebaute Eisenbahnrad während einer Fahrbewegung dieses Schienenfahrzeuges geprüft wird, indem der rollende Eisenbahnradsatz gemäß Anspruch 1 ein räumlich begrenztes Magnetfeld durchläuft, welches durch die Schienen eingekoppelt wird, auf denen das zugeordnete Schienenfahrzeug geführt wird, indem ein Gleisabschnitt funktionell als Elektromagnet benutzt und der magnetische Fluss durch das überrollende Rad analysiert wird, wobei der Radsatz, das Gleis und das Magnetjoch zwischen rechter und linker Schiene einen magnetischen Kreis ausbilden. **dadurch gekennzeichnet,**
**dass** zwischen den Schienen (2; 3) ein Elektromagnet (4; 5) angeordnet ist, auf dem zugleich eine Messwicklung zur Registrierung von Änderungen des Magnetflusses angeordnet ist.

3. Vorrichtung nach Anspruch 2, **dadurch gekennzeichnet,**
**dass** die Schienen (2; 3) durch eine funktionell als Elektromagnet ausgestaltete Schwelle (6) verbunden sind, auf der zugleich eine Messwicklung (5) zur Registrierung von Änderungen des Magnetflusses angeordnet ist.

4. Vorrichtung nach Anspruch 2, **dadurch gekennzeichnet,**
**dass** zwischen den Schienen (2; 3) und dem Elektromagnet (4; 5) Hall-Elemente oder funktionell äquivalente Magnetfeld-Sensoren eingebracht sind

5. Vorrichtung nach Anspruch 2, **dadurch gekennzeichnet,**
**dass** der Elektromagnet (4; 5) zwischen den Schienen (2; 3) aus Transformatorenblech oder Ferrit besteht.

6. Vorrichtung nach Anspruch 2, **dadurch gekennzeichnet,**
**dass** die Länge und die Anzahl der Segmente (7) der aus jeweils zwei Schienen (2; 3) bestehenden Gleisstücke derart ausgewählt werden, dass zumindest zwei nahe beieinander liegende Radsätze (1) parallel prüfbar sind.

7. Vorrichtung nach Anspruch 2, **dadurch gekennzeichnet,**
**dass** die Länge und die Anzahl der Segmente (7) der aus jeweils zwei Schienen (2; 3) bestehenden Gleisstücke derart ausgewählt werden, dass ein gesamter Umlauf eines üblichen Eisenbahnrades prüfbar ist.

8. Vorrichtung nach Anspruch 2, **dadurch gekennzeichnet,**
**dass** aufeinanderfolgende Segmente (7) der aus jeweils zwei Schienen (2; 3) bestehenden Gleisstücke jeweils durch MU-Metallplatten (8) voneinander getrennt und miteinander verlascht sind.

## Claims

1. Procedure for inspecting railway wheels with respect to use-related wear and/or a material defect, in which the railway wheel installed in a railway vehicle is tested while this railway vehicle is in motion, **characterised in**
**that** the rolling railway wheelset passes through a spatially restricted magnetic field that is coupled through the rails along which the allocated rail vehicle is guided by functionally using a track portion as an electromagnet and analysing the magnetic flux through the rolling wheel, wherein the wheelset, track and magnetic yoke form a magnetic circuit between the right and left rails.

2. Device for inspecting railway wheels with respect to use-related wear and/or a material defect, in which the railway wheel installed in a railway vehicle is tested while this railway vehicle is in motion, **characterised in that** the rolling railway wheelset according to Claim 1 passes through a spatially restricted magnetic field that is coupled through the rails along which the allocated rail vehicle is guided by functionally using a track portion as an electromagnet and analysing the magnetic flux through the rolling wheel, wherein the wheelset, track and magnetic yoke form a magnetic circuit between the right and left rails, **characterised in**
**that** an electromagnet (4; 5) is located between the rails (2; 3), on which electromagnet a measuring winding for recording changes in the magnetic flux is arranged at the same time.

3. Device according to Claim 2 **characterised in**
**that** the rails (2; 3) are connected by a threshold (6) that is functionally configured as an electromagnet on which a measuring coil (5) is also configured for registering changes in the magnetic flux.

4. Device according to Claim 2 **characterised in**
**that** hall elements or functionally equivalent magnetic field sensors are incorporated between the rails (2; 3) and the electromagnet (4; 5)

5. Device according to Claim 2 **characterised in**
**that** the electromagnet (4; 5) between the rails (2; 3) is made of transformer sheet metal or ferrite.

6. Device according to Claim 2 **characterised in**
**that** the length and the number of segments (7) in the track sections comprising two rails (2; 3) in each case are selected in such a way that at least two wheelsets (1) located close to one another can be tested in parallel.

7. Device according to Claim 2 **characterised in**
**that** the length and the number of segments (7) in the track sections comprising two rails (2; 3) in each case are selected in such a way that a complete rotation of a normal railway wheel can be tested.

8. Device according to Claim 2 **characterised in**
**that** successive segments (7) of the track sections comprising two rails (2; 3) in each case are each separated from one another by MU-metal (permalloy) plates (8) and are fishplated together.

## Revendications

1. Procédé de contrôle de roues ferroviaires relatif à une usure liée à leur exploitation et/ou à un défaut de matière, la roue ferroviaire montée dans un véhicule sur rail étant contrôlée pendant un roulement de ce véhicule sur rail, **caractérisé en ce que**
l'essieu monté roulant traverse un champs magnétique limité qui est introduit par les rails sur lesquels est amené le véhicule sur rail affecté, en utilisant fonctionnellement un tronçon de voie comme électroaimant et en analysant le flux magnétique qui traverse la roue en rotation sur le rail, ce faisant l'essieu monté, la voie et la culasse magnétique forment un circuit magnétique entre le rail de gauche et le rail de droite.

2. Dispositif de contrôle de roues ferroviaires relatif à une usure liée à leur exploitation et/ou à un défaut de matière, la roue ferroviaire montée dans un véhicule sur rail étant contrôlée pendant un roulement de ce véhicule sur rail, l'essieu monté roulant selon la revendication 1 traversant un champs magnétique limité qui est introduit par les rails sur lesquels est amené le véhicule sur rail affecté, en utilisant fonctionnellement un tronçon de voie comme electroaimant et en analysant le flux magnétique traversant la roue en rotation sur le rail, ce faisant l'essieu monté, la voie et la culasse magnétique forment un circuit magnétique entre le rail de gauche et le rail de droite **caractérisé en ce que**
entre les rails (2; 3) est monté un électroaimant (4; 5) sur lequel est en même temps disposé un enroulement de mesure permettant d'enregistrer les variations du flux magnétique.

3. Dispositif selon revendication 2 **caractérisé en ce que**
les rails (2; 3) sont reliés par une traverse (6) configurée fonctionnellement comme un électroaimant sur lequel est en même temps disposé un enroulement de mesure (5) permettant d'enregistrer les variations du flux magnétique.

4. Dispositif selon revendication 2 **caractérisé en ce que**
des éléments à effet Hall ou des capteurs de champs magnétique de fonction équivalente sont montés entre les rails (2; 3) et l'électroaimant (4; 5)

5. Dispositif selon revendication 2 **caractérisé en ce que**
l'électroaimant (4; 5) entre les rails (2; 3) est constitué de tôle de transformateur ou de ferrite.

6. Dispositif selon revendication 2 **caractérisé en ce que**
la longueur et le nombre des segments (7) des parties de voie formées respectivement de deux rails (2; 3) sont sélectionnés de telle sorte qu'au moins deux essieux montés très proches l'un de l'autre (1) puissent être contrôlés parallèlement.

7. Dispositif selon revendication 2 **caractérisé en ce que**
la longueur et le nombre des segments (7) des parties de voie formées respectivement de deux rails (2; 3) sont sélectionnés de telle sorte que toute la circonférence d'une roue ferroviaire usuelle puisse être contrôlée.

8. Dispositif selon revendication 2 **caractérisé en ce que**
les segments (7) successifs des parties de voie formées respectivement de deux rails (2; 3) sont respectivement séparées l'une de l'autre par des plaques en mumétal (8) et éclissées entre elles.
